# EUROPEAN PATENT APPLICATION

(11) **EP 1 643 673 A1**
(43) Date of publication of application: **05.04.2006**
(21) Application number: 05112972.4
(22) Date of filing: 22.11.2001
(51) Int. Cl.: H04L 1/18

(54) **Wireless data communication**

(30) Priority: 09.02.2001 KR 2001006519
(62) Divisional of application: 01309845.4
(71) Applicant: Samsung Electronics Co, Ltd, Suwon-si, Gyeonggi-do 442-742 (KR)
(72) Inventor: Park, Jae-han N/W & Con. Team, West, 2 Floor, RS, Giheung-eup, Yongin-city Gyunggi-do (KR)
(74) Representative: Jackson, Jonathan Andrew

(57) **Abstract**

A wireless data communication system involves two types of data packets. A first type requires a response from a receiving apparatus and a second type that does not require a response from the receiving apparatus. A transmitting apparatus (10) determines that a packet of the second type has been sent by checking whether its data has left a transmission buffer (15). A flag (15a) is provided to indicate whether a packet's data is in the buffer (15).

## Description

The present invention relates to a method of wirelessly transmitting a data packet, the method comprising, in an initiating apparatus, transferring data from a buffer for transmission, and determining whether said data has been transmitted.

Bluetooth is a recently developed standard for wireless communication over ranges of 10m to 100m with speeds of up to 1Mbps.

The Bluetooth system uses the ISM (Industrial Scientific Medical) band at 2.4GHz.

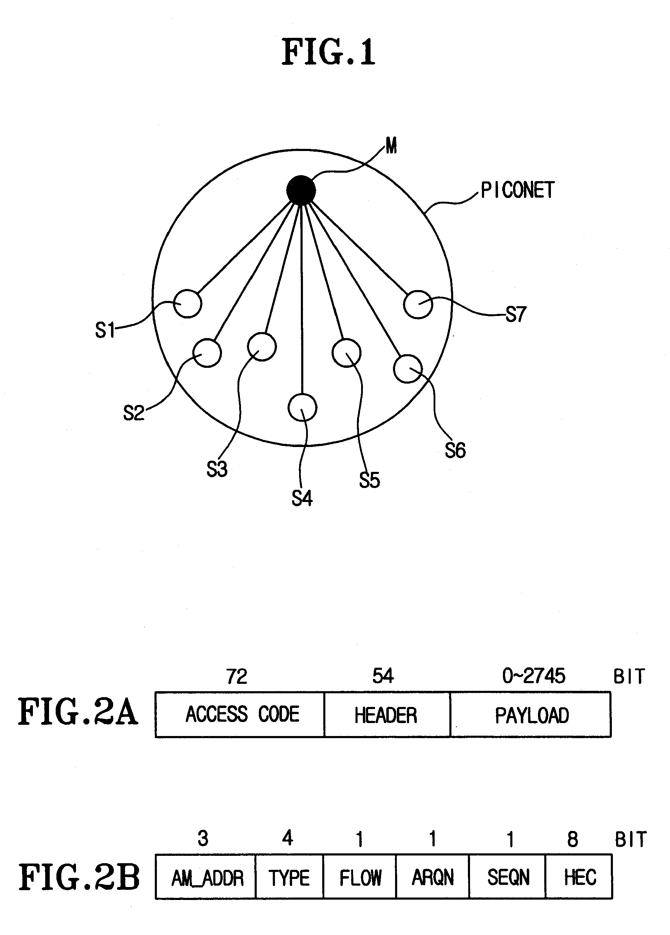

Figure 1 shows the structure of a Bluetooth piconet.

Referring to Figure 1, in a Bluetooth communication system, a piconet is formed such that a plurality of slave devices (S₁ - S₇) are connected to a master device (M). At most, seven slave devices (S₁ - S₇) can be connected to the master device (M) in an active mode in one piconet. In the piconet, the master device (M) and the slave devices (S₁ - S₇) communicate using packets.

Figure 2A shows the structure of the packets transmitted in the piconet shown in Figure 1. Figure 2B shows the header of the packet in more detail.

Referring to Figure 2B, a packet header has a total of 18 bits consisiting of AM_ADDR, TYPE, FLOW, ARQN, SEQN and HEC fields.

ARQN consists of 1 bit and is an acknowledgement indicator, used for notifying a source of a successful transmission without CRC (Cyclic Redundancy Check) errors.

A response message having acknowledge information takes one of two forms: positive acknowledgement (ACK) and negative acknowledgement (NAK). The ACK is sent by setting ARQN to 1 and the NAK is sent by setting ARQN to 0.

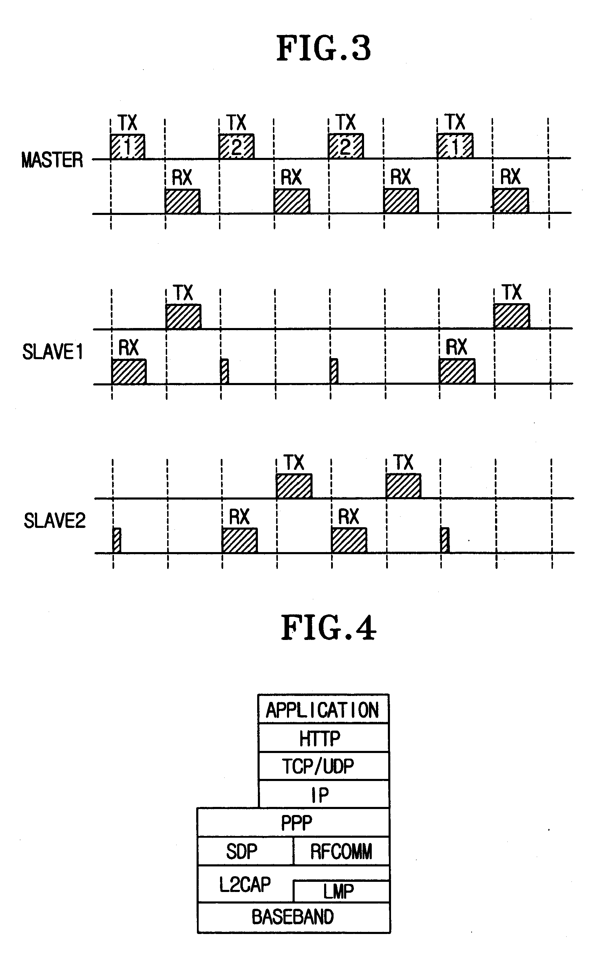

Moreover, in Bluetooth communication, the master device and the slave devices perform bi-directional communication by a TDD (Time Division Duplex) method as shown in Figure 3. The master device designates and transmits data to a target slave device in a Tx slot. In Figure 3, the 1s and 2s in the Tx slots of the master indicate that they are for slave 1 and slave 2 respectively. The slave devices receive data from the master in the corresponding Rx slots of their own timebases.

Figure 4 illustrates the Bluetooth protocol stack.

LMP (Link Manager Protocol) layer establishes a link between a source wireless communication apparatus and a destination wireless communication apparatus, and manages security and control thereof. The LMP layer builds a packet containing a response message to a request-to-send message.

After sending a request-to-send message, the source wireless communication apparatus must receive a response message from the destination wireless communication apparatus within a predetermined time, in other words within an LMP response time. Therefore, the source wireless communication apparatus confirms the acknowledgement information relating to the request message or whether the request message has been received by the destination wireless communication apparatus, then determines whether to re-send the request message or to perform the next operation according to the message flow.

On the other hand, in the LMP layer, when a piconet does not have a response message, the source wireless communication apparatus confirms whether the destination wireless communication apparatus received a signal, a baseband layer (refer to Figure 4) analyses acknowledge information included in the header of a Null packet, or an ARQN value included in the header is judged and acknowledgement information is offered to the LMP layer.

In addition, when sending request information, that is when sending more than two different data messages consecutively, after receiving request message data from another wireless communication apparatus, a wireless communication apparatus having a Bluetooth module processes the received null packet in the baseband after sending the first message and offers acknowledgement information to the LMP layer.

Then, the LMP layer determines whether to send a second message or to send the first message again, using the acknowledgement information received from the baseband layer.

As described above, if a request message is sent in a Bluetooth communication, it can be determined whether the request message has been sent successfully by the transmission of the acknowledgement information from the baseband layer to the LMP layer.

Therefore, it causes overload in the baseband layer, and there is increased signalling between the baseband layer and the LMP layer.

The present invention has been made to overcome the above-mentioned problems of the related art.

According to a first aspect of the present invention there is provided a wireless communication apparatus for transceiving data, that receives an acknowledgement (ACK) message upon completing data transmission, the wireless communication apparatus comprising a transceiving unit for transmitting and receiving data to and from an external apparatus; a buffer for storing data to be transmitted and having an indicator for indicating an existence of data; and a controller for checking the indicator of the buffer when the ACK message is not received and confirming that the data is sent to the destination wireless communication apparatus successfully if there is no data in the buffer.

Preferably, when the wireless communication apparatus for transceiving data does not receive the ACK message even upon completing data transmission, the controller checks the indicator of the buffer, and if there is no data in the buffer, confirms that the data is sent to the destination successfully.

There is envisaged a corresponding method associated with the first aspect.

According to another aspect, there is provided a method being characterised in that said data is determined to have been transmitted if it is not in said buffer at the end of a time interval beginning when said data is stored in the buffer.

Preferably, a method according to the present invention comprises setting a flag when said data is stored in the buffer and resetting the flag when said data is transferred from the buffer, and said data is determined to have been transmitted by checking the state of said flag at the end of said time interval.

Preferably, a method according to the present invention includes starting a timer operation in conjunction with the storing of said data in the buffer for establishing said interval.

According to the present invention, there is also provided a method of wirelessly transmitting a plurality of data packets, the method comprising, in an initiating apparatus:-
storing first data in a buffer, the first data comprising a message requiring a response;
transferring said first data from the buffer for transmission;
determining whether said first data has been transmitted by waiting for a response thereto within a response window,
storing second data in the buffer, the second data comprising a message not requiring a response; and
performing a method of transmitting a data packet according to the present invention as set out above.

Preferably, a method of transmitting a plurality of packets according to the present invention comprises, at a responsive apparatus:
receiving said first data;
transmitting a response, including an acknowledgement, in response to reception of said first data; and
receiving said second data,
wherein no response is sent in response to reception of said second data.

The present invention extends to an apparatus configured to perform a method according to the present invention.

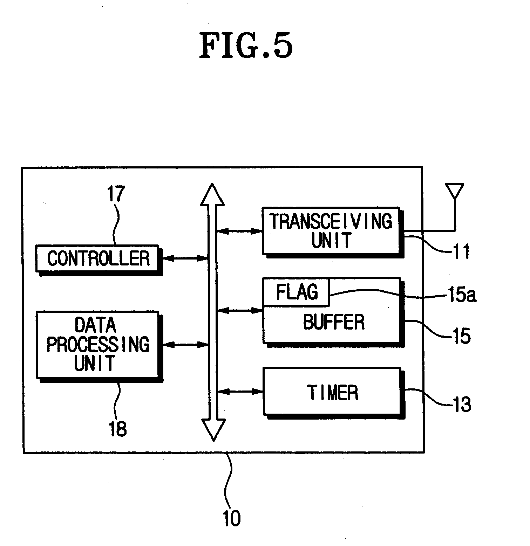

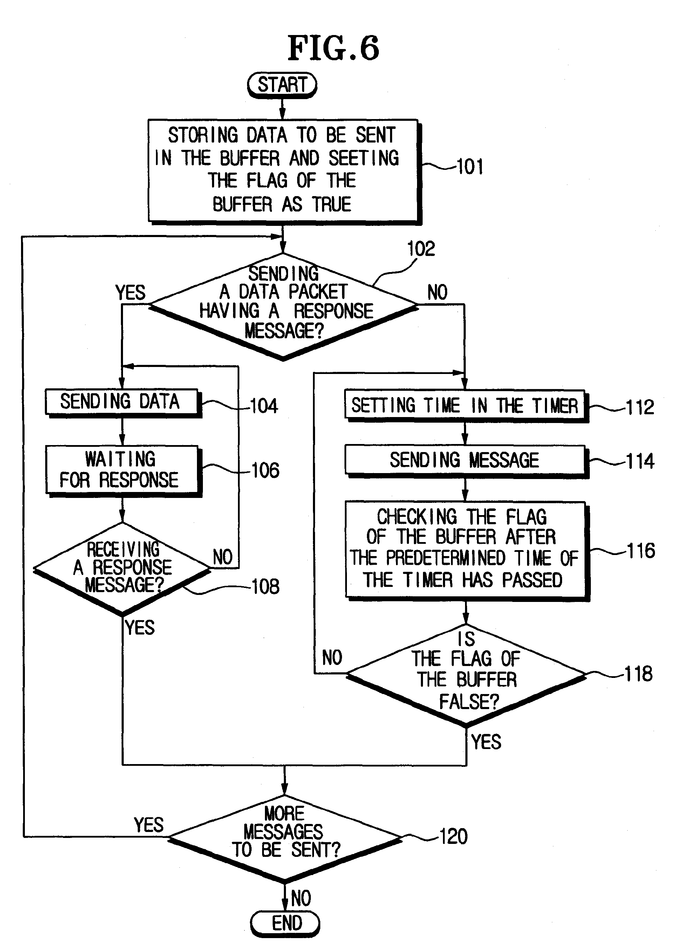

An embodiment of the present invention will now be described, by way of example, with reference to Figures 5 and 6 of the accompanying drawings, in which:-
Figure 1 shows the structure of a Bluetooth Piconet;
Figure 2A shows the structure of a packet transmitted in a Bluetooth piconet;
Figure 2B shows the header of the packet of Figure 2A in detail;
Figure 3 illustrates the transmission and reception time slots of components of a Bluetooth piconet;
Figure 4 shows the Bluetooth protocol stack;
Figure 5 is a block diagram of a wireless communication apparatus according to the present invention; and
Figure 6 is a flowchart illustrating a communication method according to the present invention.

Referring to Figure 5, a wireless communication apparatus 10 comprises a transceiving unit 11, a timer 13, a buffer 15, a controller 17 and a data processing unit 18.

The transceiving unit 11 processes received RF signals in the 2.4GHz band, and transmits packets as RF signals. The buffer 15 has a flag 15a and temporarily stores data intended to be sent by the transceiving unit 11. If there is data stored in the buffer 15, the flag 15a is set to true (flag = true), and if there is no data stored in the buffer 15, then the flag 15a is set to false (flag = false). The wireless communication apparatus can confirm that the has been sent correctly by checking the flag 15a.

The timer 13 determines the timing of the checking of whether data has been sent successfully. The time for checking whether the data has been sent successfully has to be less than the LMP response timeout (30 seconds) or the supervision timeout (default 20 seconds, maximum 40.9 seconds).

The controller 17 implements the baseband layer of a protocol stack corresponding to that of the Bluetooth standard as shown in Figure 4, and communicates with a host connected via a HCI (Host Controller Interface) (not shown). The host can be any of various devices that can operated as communication terminals such as laptop computers, cellular phones, and printers.

The data processing unit 18 implements a protocol stack layer corresponding to the LMP layer of the Bluetooth protocol stack as shown in Figure 4, and performs functions including controlling the transceiving unit 11, link control, controlling the logic channel, data whitening, address allocation and security. In addition, the data processing unit 18 confirms that data has been sent successfully by checking the flag 15a of the buffer 15 when transmitting data packets having no response message, and transmits request message data of its own after receiving request message data from another wireless communication apparatus, namely more than two different types of message data consecutively.

Here, if a transmission success checking time is set in the timer 13, the data processing unit 18 confirms the transmission of the data by checking the flag 15a of the buffer 15 when the time set in the timer 15 is exceeded. At that time, if the flag 15a indicates 'false', then it is determined that the data has been sent successfully.

The operation of the wireless communication apparatus will now be described with reference to Figure 6.

First, when the source wireless communication apparatus intends to transmit data, the wireless communication apparatus stores the data in the buffer 15 and sets the flag 15a of the buffer 15 as 'true' (step 101). Then, the wireless communication apparatus checks whether the data intended to be sent is a data packet having a response message (step 102).

When the data packet has a response message, the data is sent (step 104). Then, the wireless communication apparatus waits for the reception of a response message during the LMP layer response time. After that, the wireless communication apparatus checks for the reception of the response message (step 108), and if the response message has not been received, the data is re-sent.

After checking that the data has been transmitted successfully, the wireless communication apparatus again checks whether there is more data to be sent (step 120). If there is more data to be sent, the wireless communication apparatus returns to the step 102.

If there is no response message, such as when sending data having no response message or sending more than two different types of message consecutively, the waiting time for checking whether the data has been transmitted successfully is set in the timer 13 (step 112). Then, the data is read from the buffer 15 and sent in a Tx slot (step 114).

After the time, set in the timer 13, has been exceeded, the wireless communication apparatus checks the flag 15a of the buffer 15 (step 116). If the flag 15a of the buffer 15 indicates 'true,' it means that data is stored in the buffer 15. Thus it is confirmed that the data has not been sent to a destination wireless communication apparatus. Therefore, the wireless communication apparatus returns to step 112, sets the time in the timer 13, then repeats from step 114 to step 118. However, if the flag 15a of the buffer 15 indicates 'false,' it means that the data has been sent.

Thus, the wireless communication apparatus confirms that the data has been successfully sent to the destination wireless communication apparatus.

After confirming the successful sending of data, the source wireless communication apparatus checks whether there is more data to be sent. If there is more data to be sent, the source wireless communication apparatus returns to step 102.

As is apparent from the foregoing, the successful transmission of data can be easily checked. In addition, the baseband processing load is decreased vis-à-vis the prior art and the signalling interface between the baseband and the LMP layers is reduced.

## Claims

1. A wireless communication apparatus for transceiving data, that receives an acknowledgement (ACK) message upon completing data transmission, the wireless communication apparatus comprising:
a transceiving unit for transmitting and receiving data to and from an external apparatus;
a buffer for storing data to be transmitted and having an indicator for indicating an existence of data; and
a controller for checking the indicator of the buffer when the ACK message is not received and confirming that the data is sent to the destination wireless communication apparatus successfully if there is no data in the buffer.

2. The wireless communication apparatus of claim 1, wherein, when the wireless communication apparatus for transceiving data does not receive the ACK message even upon completing data transmission, the controller checks the indicator of the buffer, and if there is no data in the buffer, confirms that the data is sent to the destination successfully.

3. A method of wirelessly transmitting a data packet, the method comprising, in an initiating apparatus (10):
transferring data from a buffer (15) for transmission; and
determining whether said data has been transmitted,
**characterised in that** said data is determined to have been transmitted if it is not in said buffer (15) at the end of a time interval beginning when said data is stored in the buffer (15).

4. A method according to claim 3, comprising setting a flag (15a) when said data is stored in the buffer (15) and resetting the flag (15a) when said data is transferred from the buffer (15), wherein said data is determined to have been transmitted by checking the state of said flag (15a) at the end of said time interval.

5. A method according to claim 3 or 4, including starting a timer operation in conjunction with the storing of said data in the buffer (15) for establishing said interval.

6. A method of wirelessly transmitting a plurality of data packets, the method comprising, in an initiating apparatus:-
storing first data in a buffer (15), the first data comprising a message requiring a response;
transferring said first data from the buffer (15) for transmission;
determining whether said first data has been transmitted by waiting for a response thereto within a response window,
storing second data in the buffer (15), the second data comprising a message not requiring a response; and
performing a method according to claim 3, 4 or 5 in respect of said second data.

7. A method according to claim 6, comprising, at a responsive apparatus:
receiving said first data;
transmitting a response, including an acknowledgement, in response to reception of said first data; and
receiving said second data,
wherein no response is sent in response to reception of said second data.

8. An apparatus configured to perform a method according to any preceding claim.

9. A wireless communication apparatus for transceiving data wirelessly, comprising:
a transceiving unit for transmitting and receiving data to and from an external apparatus;
a buffer for storing data, the buffer having an indicator for indicating an existence of data; and
a controller for checking the indicator of the buffer with regard to the data being sent to a destination wireless communication apparatus via the transceiving unit, and for confirming that the data is sent to the destination wireless communication apparatus successfully if there is no data in the buffer.

10. The wireless communication apparatus of claim 9, wherein the controller checks a flag of the buffer and obtains acknowledgement information of the data which is sent to the destination wireless communication apparatus, when sending data having no response message.

11. The wireless communication apparatus of claim 9, wherein the controller checks a flag of the buffer and obtains acknowledgement information of the data which is sent to the destination wireless communication apparatus, when sending more than two different types of message data.

12. The wireless communication apparatus of claim 9, further comprising:
a timer for setting a waiting time for checking if data has been sent, and the controller checks the indicator of the buffer when a predetermined time of the timer is exceeded.

13. A wireless communication method for transceiving data wirelessly, comprising the steps of:
a) storing data to be sent in a buffer, and activating an indicator of the buffer when the data exists in the buffer;
b) examining the buffer after sending the data to a destination wireless communication apparatus; and
c) confirming that the data has been sent to the destination wireless communication apparatus if the indicator indicates that there is no data in the buffer.

14. The wireless communication method of claim 13, wherein when sending a data packet without a response message, the step (b) checks the flag of the buffer and obtains the acknowledge information of the data.

15. The wireless communication method of claim 13, wherein, when sending more than two different types of message data, the step (b) checks the flag in the buffer and obtains acknowledgement information of the data.

16. The wireless communication method of claim 13, further comprising the step of setting a waiting time for checking if the data has been sent, wherein the indicator of the buffer is checked after a predetermined time has passed.

17. A wireless communication system comprising a plurality of wireless communication apparatuses, each of which operates as a master or a slave, the master wireless communication apparatus sends data to a destination slave wireless communication apparatus, wherein the master wireless communication apparatus stores the data in a buffer, activates an indicator of the buffer with regard to an existence of the data in the buffer, sends the data to the destination slave device, checks the indicator of the buffer, and, if the indicator indicates a non-existence of the data in the buffer, the master wireless communication apparatus confirms that data has been sent to the destination slave device.
